# EUROPÄISCHE PATENTANMELDUNG

(11) **EP 3 282 102 A1**
(43) Veröffentlichungstag der Anmeldung: **14.02.2018**
(21) Anmeldenummer: 16183704.2
(22) Anmeldetag: 11.08.2016
(51) Int. Cl.: F01K 13/02, F01K 23/10

(54) **KRAFTWÄRMEKOPPLUNGS-GAS UND DAMPFTURBINEN-KRAFTWERK**

(71) Anmelder: E.ON Energy Projects GmbH, 80335 München (DE)
(72) Erfinder: Heß, Rudolf, 84076 Pfeffenhausen (DE); Gassler, Mario, 6465 Nassereith (AT); Schmidt, Thomas, 81929 München (DE)
(74) Vertreter: Glawe, Delfs, Moll

(57) **Zusammenfassung**

Die Erfindung betrifft ein Kraftwärmekopplungs-Gas und Dampfturbinen-Kraftwerk (KWK-GuD-Kraftwerk 1), insbesondere im mittleren Leistungssegment mit einer elektrischen Gesamtleistung von 5 bis 15 MW.

Das KWK-GuD-Kraftwerk (1) umfasst eine Gasturbine (10) mit daran angeschlossenem Generator (16) zur Erzeugung elektrischer Leistung und einem Abhitzekessel (20) zur Dampferzeugung durch Erhitzen von Speisewasser mit dem Abgas der Gasturbine (10), eine mit dem im Abhitzekessel erzeugten Dampf betriebene Dampfturbine (30) mit daran angeschlossenem Generator (31) zur Erzeugung elektrischer Leistung, wobei wenigstens ein Teil des aus der Dampfturbine (30) austretende Dampfs oder des in der Dampfturbine (30) entstehende heißen Kondensats als Prozessmedium abgeführt wird. Weiterhin ist ein Steuerungssystem (40) umfassend ein Expertensystem (41) vorgesehen und die für den Betrieb des KWK-GuD-Kraftwerk (1) erforderlichen Stellglieder (24, 33, 37, 38) und Sensoren (51, 52) sind wenigstens einfach redundant ausgeführt, sodass das Expertensystem (41) bei Feststellung einer Abweichung des tatsächlichen Verhaltens von dem erwarteten Verhalten des KWK-GuD-Kraftwerk (1) potentiell fehlerhafte Stellglieder und/oder Sensoren ermittelt und auf die jeweils redundant vorgesehenen Stellglieder und/oder Sensoren umschaltet.

## Beschreibung

Die Erfindung betrifft ein Kraftwärmekopplungs-Gas und Dampfturbinen-Kraftwerk, insbesondere im mittleren Leistungssegment mit einer elektrischen Gesamtleistung von 5 bis 15 MW.

Gas- und Dampfturbinen-Kraftwerke (GuD-Kraftwerke) sind im Stand der Technik bekannt. Bei entsprechenden Kraftwerken treibt eine Gasturbine einen ersten Generator zur Erzeugung elektrischer Leistung an, deren Abwärme zur Erzeugung von Dampf genutzt wird, mit dem eine Dampfturbine betrieben wird, die einen zweiten Generator zur Erzeugung elektrischer Leistung antreibt. Entsprechende Kraftwerke werden insbesondere für den Lastausgleich in elektrischen Versorgungsnetzen verwendet und verfügen dafür in der Regel über eine elektrische Leistung im Bereich zwischen 80 und 845 MW pro Gasturbinen-Dampfturbinen-Kombination.

Auch ist bekannt, die bei einem GuD-Kraftwerk entstehende Abwärme zu nutzen, um bspw. Wasser für die Fernwärme zu erwärmen. Bei entsprechenden Kraft-Wärme-Kopplungen (KWK) wird neben elektrischer Energie also auch noch thermische Energie nutzbar bereitgestellt. Der Wirkungsgrad eines GuD-Kraftwerks mit Kraft-Wärme-Kopplung bezogen auf die elektrische Energieerzeugung wird dabei zwar reduziert, bei der Betrachtung sowohl der elektrischen als auch der thermischen Energieerzeugung ist aber regelmäßig ein erhöhter Gesamtwirkungsgrad erreichbar. Eine entsprechende Kraft-Wärme-Kopplung ist jedoch nur dann sinnvoll, wenn sich das GuD-Kraftwerk in der Nähe zu einem Abnehmer für die Wärme - bspw. das Fernwärmenetz einer Stadt - befindet.

GuD-Kraftwerke mit großer Leistung gemäß dem Stand der Technik werden, unabhängig ob mit oder ohne Kraftwärmekopplung, aufgrund ihrer Leistung und Bedeutung für die Versorgungssicherheit in den Versorgungsnetzen sowie sonstigen Sicherheitsaspekten, insbesondere aufgrund der im Kraftwerk herrschenden Drücke und damit einhergehenden Gefahren, unter ständiger Beobachtung betrieben. Dazu ist ein Schichtbetrieb vorgesehen, bei dem jede Schicht wenigstens zwei für das Betreiben des Kraftwerks qualifizierte Personen umfasst.

Aus dem Stand der Technik sind weiterhin sog. Blockheizkraftwerke (BHKW) bekannt, die nach dem Prinzip von KWK-Kraftwerken sowohl elektrische Energie als auch nutzbare Wärme erzeugen. Als Antrieb für einen Generator zur Stromerzeugung werden häufig Verbrennungsmotoren verwendet, die durch den Motor und/oder den Generator erzeugte Abwärme wird zur Erwärmung von Wasser eingesetzt, welches unmittelbar vor Ort, bspw. zum Heizen, genutzt wird. Entsprechende Blockheizkraftwerke werden in Wohnhäusern oder Geschäftsquartieren verwendet und weisen meist eine elektrische Leistung von unter 1 MW auf. Sie können ohne ständige Beaufsichtigung betrieben werden, da einerseits die Prozessführung (insbesondere ohne hohe Drücke) wenig sicherheitskritisch ist, andererseits regelmäßig ein Netzanschluss vorgesehen ist, über den elektrische Leistung und Wärme bei Ausfall eines Blockheizkraftwerks ausgeglichen werden kann.

Zwischen den großen GuD-Kraftwerken mit mehr als 80 MW elektrischer Leistung pro Gasturbinen-Dampfturbinen-Kombination und den Blockheizkraftwerken mit weniger als 1 MW sind Kraftwerke im mittleren Leistungssegment mit einer elektrischen Gesamtleistung von 5 bis 15 MW angesiedelt, die häufig zur Versorgung von Industrieanlagen vorgesehen sind.

Eine Variante entsprechender Kraftwerke sind KWK-GuD-Kraftwerk im mittleren Leistungssegment mit einer elektrischen Gesamtleistung von 5 bis 15 MW, bei denen - vergleichbar zu den zuvor beschriebenen großen GuD-Kraftwerken - eine Gasturbine einen ersten Generator zur Erzeugung elektrischer Energie antreibt und das Abgas der Gasturbine zur Dampferzeugung genutzt wird, wobei der Dampf wiederum eine Dampfturbine und einen damit verbundenen zweiten Generator antreibt. Der aus der Dampfturbine austretende Wasserdampf kann als Wärmelieferant weiter verwendet werden.

Entsprechende KWK-GuD-Kraftwerke im mittleren Leistungssegment werden im Rahmen von Industrieanlagen als unabhängige Energieversorgung eingesetzt und liefern neben der elektrischen Leistung zum Betrieb der Industrieanlagen auch noch Wasserdampf, der unmittelbar in der Industrieanlage verwendet werden kann, bevor er - im Regelfall kondensiert - zurückgeführt wird. Da bei entsprechenden Industrieanlagen sowohl eine kontinuierliche Versorgung sowohl mit elektrischer Leistung als auch mit Wasserdampf für einen ordnungsgemäßen Betrieb erforderlich sind und bei Ausfall des Kraftwerkes auch nicht ohne weiteres von einem vorgelagerten Versorgungsnetz aufgefangen werden kann, ist eine hohe Zuverlässigkeit und Verfügbarkeit entsprechender KWK-GuD-Kraftwerke erforderlich. Um dies sicherzustellen, werden KWK-GuD-Kraftwerke im mittleren Leistungssegment gemäß dem Stand der Technik - ähnlich wie große GuD-Kraftwerke - unter ständiger Beaufsichtigung betrieben. Ein dafür erforderlicher Drei-Schicht-Betrieb ist angesichts der erzeugten Leistung jedoch nicht kostendeckend möglich und lediglich durch die dadurch erreichte Betriebssicherheit der nachgeschalteten Industrieanlage zu rechtfertigen.

Aufgabe der vorliegenden Erfindung ist es, ein KWK-GuD-Kraftwerk, insbesondere im mittleren Leistungssegment, zu schaffen, bei dem die Nachteile aus dem Stand der Technik nicht mehr oder zumindest nur noch im verminderten Umfang auftreten.

Gelöst wird diese Aufgabe durch ein KWK-GuD-Kraftwerk gemäß dem Hauptanspruch. Vorteilhafte Weiterbildungen sind Gegenstand der abhängigen Ansprüche.

Demnach betrifft die Erfindung ein KWK-GuD-Kraftwerk, insbesondere im mittleren Leistungssegment mit einer elektrischen Gesamtleistung von 5 bis 15 MW, umfassend eine Gasturbine mit daran angeschlossenem Generator zur Erzeugung elektrischer Leistung und einem Abhitzekessel zur Dampferzeugung durch Erhitzen von Speisewasser mit dem Abgas der Gasturbine, eine mit dem im Abhitzekessel erzeugten Dampf betriebene Dampfturbine mit daran angeschlossenem Generator zur Erzeugung elektrischer Leistung, wobei wenigstens ein Teil des aus der Dampfturbine austretenden Dampfs oder des in der Dampfturbine entstehenden heißen Kondensats als Prozessmedium abgeführt wird, und wobei ein Steuerungssystem umfassend ein Expertensystem vorgesehen ist und die für den Betrieb des KWK-GuD-Kraftwerk erforderlichen Stellglieder und Sensoren wenigstens einfach redundant ausgeführt sind, sodass das Expertensystem bei Feststellung einer Abweichung des tatsächlichen Verhaltens von dem erwarteten Verhalten des KWK-GuD-Kraftwerk potentiell fehlerhafte Stellglieder und/oder Sensoren ermittelt und auf die jeweils redundant vorgesehenen Stellglieder und/oder Sensoren umschaltet.

Zunächst werden einige im Zusammenhang mit der Erfindung verwendete Begriffe erläutert:
"KWK" steht für "Kraft-Wärme-Kopplung". "GuD" ist die Abkürzung für "Gas- und Dampfturbinen".

Für eine erste Komponente liegt eine "einfache Redundanz" vor, wenn neben der fraglichen Komponente noch eine weitere Komponente vorgesehen ist, welche die Aufgaben der ersten Komponente bei deren Ausfall übernehmen kann. Eine "zweifache Redundanz" liegt vor, wenn für eine erste Komponente noch zwei weitere Komponenten vorgesehen sind, die im Zweifelsfall jeweils für sich genommen die Aufgaben der ersten Komponente übernehmen können. Eine Redundanz ist eine "kalte Redundanz", wenn die redundant vorgesehene Komponente(n) im Normalbetrieb der ersten Komponente inaktiv ist bzw. sind.

Eine "2oo3-Konfiguration" ("two out of three") von Sensoren bedeutet, dass die Messergebnisse von drei aktiven Sensoren durch einen Mehrheitswähler zu einem Messergebnis zusammengefasst werden. Weicht das Messergebnis eines Sensors von denjenigen der anderen Sensoren ab, wird das Messergebnis dieses Sensors von denen der anderen Sensoren überstimmt und nicht weiter berücksichtigt.

Ein Abschalten eines Kraftwerks gilt als "geordnet", wenn die erzeugte Leistung gesteuert heruntergefahren wird, bis keine Leistung, insbesondere keine elektrische Leistung, mehr erzeugt wird.

Ein erfindungsgemäßes KWK-GuD-Kraftwerk zeichnet sich dadurch aus, dass es zumindest über einen Zeitraum, der einen Ein-Schicht-Betrieb des Kraftwerks, ggf. auch ohne Wochenendarbeit, ermöglicht, ohne unmittelbare Beaufsichtigung betrieben werden kann. Das erfindungsgemäß vorgesehene Expertensystem übernimmt in den Zeiten ohne unmittelbare Beaufsichtigung die Überwachung des Kraftwerks, die aufgrund der redundant vorgesehenen Sensoren ausreichend sicher ist, und kann bei Feststellung von Fehlfunktionen einzelner Stellglieder auf redundant vorgesehene Stellglieder zurückgreifen, sodass selbst bei einer Fehlfunktion eines Stellgliedes kein unmittelbarer menschlicher Eingriff erforderlich ist, um einen Weiterbetrieb des Kraftwerkes oder zumindest ein geordnetes Abschalten zu ermöglichen. Das erfindungsgemäße KWK-GuD-Kraftwerk kann aufgrund der Ermöglichung eines Ein-Schicht-Betriebs auch dann wirtschaftlich betrieben werden, wenn es sich um ein Kraftwerk im mittleren Leistungssegment handelt.

Die Redundanz der Stellglieder ist vorzugsweise eine kalte Redundanz. Das Vorsehen von kalter Redundanz der Stellglieder bietet den Vorteil, dass sich die grundsätzliche Steuerung des KWK-GuD-Kraftwerks durch parallel arbeitende Komponenten nicht verkompliziert, was der Sicherheit der Betriebsführung dient. Gleichzeitig ist die gewünschte Erhöhung der Zuverlässigkeit des KWK-GuD-Kraftwerks als solches durch kalte Redundanz gegeben.

Um sicherzustellen, dass die im Regelfall inaktiven Komponenten des KWK-GuD-Kraftwerks im Notfall einsatzbereit sind, kann das Steuerungssystem dazu ausgebildet sein, die Funktionsfähigkeit der redundant vorgesehenen Stellglieder regelmäßig zu prüfen. Beispielsweise können sämtliche redundant vorgesehenen Stellglieder in einem vorgegebenen Rhythmus (z.B. einmal wöchentlich) zwischen ihren jeweiligen Endstellungen hin- und hergefahren werden, um ihre Funktionalität zu überprüfen.

Die für den Betrieb des KWK-GuD-Kraftwerks erforderlichen Sensoren - also diejenigen, deren Messergebnisse unmittelbar durch das Steuerungssystem bei der Steuerung berücksichtigt werden - sind vorzugsweise zweifach redundant vorgesehen und in einer 2oo3-Konfiguration angeordnet. Durch eine solche zweifache Redundanz kann ein Weiterbetrieb des KWK-GuD-Kraftwerks auch bei Ausfall eines für den Betrieb der Anlage relevanten Sensors sichergestellt werden. Die 2oo3-Konfiguration stellt sicher, dass auch unmittelbar bei Auftreten einer Fehlfunktion eines Sensors das Steuerungssystem mit korrekten Messwerten versorgt wird.

Das Steuerungssystem und/oder das Expertensystem sind vorzugsweise ebenfalls wenigstens einfach redundant ausgeführt. Bei zweifacher Redundanz kann auch auf eine 2oo3-Konfiguration realisiert werden. Indem das Steuerungssystem und/oder das Expertensystem redundant vorgesehen sind, kann der Betrieb auch bei Ausfall eines Steuerungs- und/oder Expertensystems noch weiter betrieben werden.

Es ist bevorzugt, wenn das Steuerungssystem und/oder das Expertensystem dazu ausgebildet ist, bei Fortdauer oder erneutem Auftreten einer Abweichung von dem erwarteten Verhalten des KWK-GuD-Kraftwerk bei Steuerung nach Umstellung auf redundant vorgesehene Stellglieder und/oder Sensoren das KWK-GuD-Kraftwerk geordnet abzuschalten. Eine entsprechende Abschaltung gilt der Sicherheit des KWK-GuD-Kraftwerks.

Es ist bevorzugt, wenn zur Dampferzeugung im Abhitzekessel ein Großwasserraumkessel vorgesehen ist, wobei die Sensoren für Druck und Wasserstand im Großwasserraumkessel wenigstens einfach redundant, vorzugsweise wenigstens zweifach redundant in 2oo3-Konfiguration vorgesehen sind. Bei KWK-GuD-Kraftwerk im mittleren Leistungssegment werden häufig Großwasserraumkessel anstelle der aus GuD-Kraftwerken mit hoher Leistung bekannten Wasserrohrkessel verwendet, da die Großwasserraumkessel für diesen Leistungsbereich ausreichend und gleichzeitig kostengünstiger sind. Allerdings verfügen Großwasserraumkessel aus dem Stand der Technik über keine redundante Sensorik, weshalb zumindest zusätzliche redundante Sensoren für Druck und Wasserstand vorzusehen sind. Erst aufgrund dieser erfindungsgemäßen bevorzugten Weiterbildung kann ein Großwasserraumkessel im Rahmen des erfindungsgemäßen KWK-GuD-Kraftwerks verwenden werden.

Es ist bevorzugt, dass der Abhitzekessel ein Speisewasserregelventil mit wenigstens einfacher Redundanz aufweist, wobei vorzugsweise ein Umschaltventil zum Umschalten zwischen dem Speisewasserregelventil und dem redundanten Speisewasserregelventil vorgesehen ist. Auf das redundant vorgesehene Speisewasserregelventil kann mithilfe des Umschaltventils geschaltet werden, wenn das primäre Speisewasserregelventil ausfällt. Die vollständige Umschaltung über das Umschaltventil ist dabei vorteilhaft, um zu verhindern, dass Speisewasser durch ein defektes, wenigstens teilweise offenstehendes Speisewasserregelventil ungeregelt in den Abhitzekessel gelangt. Bei einem evtl. Ausfall des Umschaltventils kann das KWK-GuD-Kraftwerk durch das aktive Speisewasserregelventil geordnet abgeschaltet werden. Das Umschaltventil kann insbesondere durch zwei parallel geschaltete Absperrventile realisiert werden, von denen im Regelfall immer ein Absperrventil geöffnet ist während das andere Absperrventil geschlossen ist.

Bevorzugt ist ein Speisewassersystem zur Versorgung des Abhitzekessels mit Speisewasser und zur Rückführung des Kondensats und/oder Wasserdampfs aus der Dampfturbine und/oder des rückgeführten Prozessmedium vorgesehen. Das in das Speisewassersystem rückgeführte Prozessmedium kommt von der mit dem Prozessmedium versorgten Anlage, wobei im Falle von Wasserdampf als abgeführtem Prozessmedium das rückgeführte Prozessmedium in der Regel Kondensat ist. Das Speisewassersystem umfasst üblicherweise einen Speisewasserbehälter mit Entgaser sowie Speisewasserpumpen, wobei der Entgaser grundsätzlich beliebig gemäß dem Stand der Technik ausgebildet sein kann. Insbesondere ist aber bevorzugt, wenn zur Entgasung von der Dampfturbine stammender Wasserdampf verwendet und zu diesem Zweck dem Speisewassertank zugeführt wird.

Beim Speisewassersystem sind erfindungsgemäß jeweils wenigstens einfach redundant vorgesehenes Dampfregelventil und/oder Rücklaufregelventil zur Regelung der Dampfzufuhr von der Dampfturbine in den Speisewasserbehälter, insbesondere zum Zwecke der Entgasung, und/oder des Rücklaufs des Prozessmediums vorgesehen. Auch die Speisewasserpumpe kann redundant vorgesehen sein.

Da aus unterschiedlichen Gründen häufig weniger kondensiertes Prozessmedium von der angeschlossenen Anlage in das Speisewassersystem zurückgespeist wird, als dieser von dem KWK-GuD-Kraftwerk zur Verfügung gestellt wurde, kann eine Wasser-Zuspeisung vorgesehen sein, mit der bei Bedarf vorzugsweise vollentsalztes Wasser in den Speisewassertank zugespeist wird. Durch eine entsprechende Wasserzuspeisung können Verluste im Prozessmedium ausgeglichen werden.

Vorzugsweise sind in der Leitung für den Rücklauf des Prozessmediums und/oder der Leitung für die Wasserzuspeisung jeweils von dem Steuerungssystem ansteuerbare Absperrschieber vorgesehen. Durch entsprechende Absperrschieber kann, bspw. bei Überschreitung vorgegebener Grenzwerte für die Wasserreinheit, das Risiko einer Beschädigung der übrigen, an dem Speisewasserkreislauf angeschlossenen Komponenten durch verunreinigtes Wasser reduziert werden. Die Wasserreinheit kann z.B. über die Leitfähigkeit des Wassers ermittelt werden. In der Regel gilt dabei, dass die Leitfähigkeit von Wasser mit steigender Verunreinigung ebenfalls steigt.

Es ist bevorzugt, wenn zusätzliche, für die eigentliche Steuerung des KWK-GuD-Kraftwerks nicht erforderliche Sensoren vorgesehen sind, die Hinweise auf mögliche Störungen geben können. Beispielsweise können Sensoren zur Überprüfung der Reinheit von Betriebsmitteln, wie bspw. dem Speisewasser, insbesondere in Form von rückgeführtem Prozessmedium und/oder zugespeistem Wasser, vorgesehen sein, deren Messergebnisse zwar nicht unmittelbar für die Steuerung des Betriebs der KWK-GuD-Kraftwerks relevant sind, aber durchaus Hinweise auf mögliche Fehlfunktionen einzelner Komponenten des KWK-GuD-Kraftwerks oder der damit verbundenen Anlage liefern können.

Es ist bevorzugt, wenn wenigstens ein Kühlwasserkreislauf ein Expansionsbehälter mit automatischer Druckhaltesteuerung und automatischer Nachfülleinheit umfasst, die vorzugsweise redundant vorgesehen sind. Stellt die Druckhaltesteuerung fest, dass der Druck im Kühlwasserkreislauf unter einen vorgegebenen Grenzwert sinkt, wird entsprechend gegengesteuert. Wird von der automatischen Nachfülleinheit festgestellt, dass der minimale Kühlwasserstand im Expansionsbehälter unterschritten wird, wird automatisch eine Nachfüllung von Kühlwasser über initiiert, um ausreichende Kühlung sicherzustellen. Die Drucksteuereinheit und die Nachfülleinheit können wenigstens in Teilen auch miteinander kombiniert ausgeführt werden.

Es ist bevorzugt, wenn das Steuerungssystem ein Bereitschaftskommunikationsmodul zum Aussenden einer Mitteilung an einen Bereitschaft Habenden im Falle einer vom Expertensystem festgestellten Abweichung umfasst. Über das Bereitschaftskommunikationsmodul kann ein Bereitschaftshabender unmittelbar über Fehlfunktionen des KWK-GuD-Kraftwerks informiert werden und parallel zu einer Reaktion des Expertensystems, welche einen Weiterbetrieb der Anlage ermöglicht, weitere Maßnahmen ergreifen, um das KWK-GuD-Kraftwerk in Betrieb zu halten. So kann bspw. eine Notfallreparaturmannschaft benachrichtigt werden, Defekte Stellglieder und/oder Sensoren auszutauschen, bevor ein Stillstand des KWK-GuD-Kraftwerks erforderlich wird.

Es ist möglich, dass das Prozessmedium und/oder das aus dem Abhitzekessel austretende heiße Gas zur Abgabe von thermischer Leistung durch einen Wärmetauscher geführt werden. Über den Wärmetauscher kann bspw. Wasser erwärmt werden, welches dann zur Fernwärme genutzt werden kann.

Es ist weiterhin bevorzugt, wenn zwischen Gasturbine und Abhitzekessel eine Zusatzfeuerungseinrichtung vorgesehen ist. Mithilfe dieser Zusatzfeuerungseinrichtung kann auf Dampfabnahmeschwankungen in der mit dem Prozessmedium versorgten Anlage schnell und flexibel reagiert werden.

Die Erfindung wird nun anhand einer vorteilhaften Ausführungsform unter Bezugnahme auf die beigefügte Zeichnung beispielhaft beschrieben. Es zeigt:

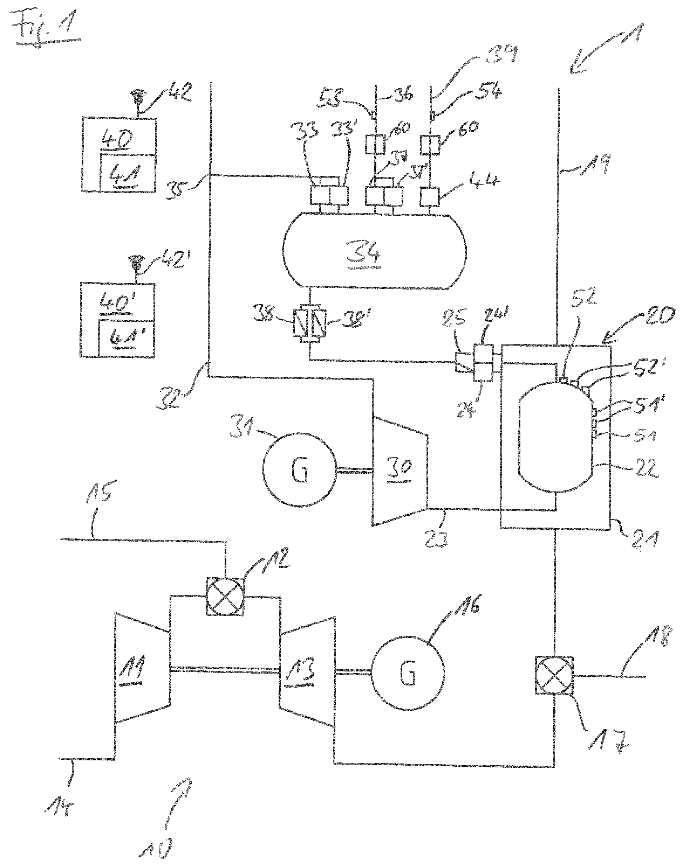

- Figur 1:: eine schematische Darstellung eines erfindungsgemäßen KWK-GuD-Kraftwerks im mittleren Leistungssegment.

In Figur 1 ist ein erfindungsgemäßes KWK-GuD-Kraftwerk 1 schematisch dargestellt. Das dargestellte KWK-GuD-Kraftwerk 1 liegt im mittleren Leistungssegment mit einer elektrischen Gesamtleistung von 10 MW. Die Darstellung ist dabei aus Gründen der Übersichtlichkeit stark vereinfacht und auf eine Auswahl von Komponenten eines KWK-GuD-Kraftwerks 1 beschränkt, an der sich die Erfindung aber ausreichend erklären lässt. Insbesondere wird lediglich ein Speisewasserkreislauf dargestellt, während auf die Darstellung von Kühlmittel- und Schmierölkreisläufen verzichtet wurde.

Das KWK-GuD-Kraftwerk 1 umfasst eine Gasturbine 10 mit einem Kompressor 11, einer Brennkammer 12 und einer Turbine 13. Im Kompressor 11 wird durch die Leitung 14 zugeführte Luft komprimiert, bevor sie in der Brennkammer 12 mit durch die Leitung 15 zugeführtem Erdgas als Brennstoff vermischt wird. Das Brennstoff-Luft-Gemisch wird dann entzündet und das heiße Abgas treibt die Turbine 13 an. Mit der Gasturbine 10 verbunden ist ein erster Generator 16, mit dem die mechanische Leistung der Gasturbine 10 in elektrische Leistung umgewandelt wird, die über nicht näher dargestellte Leitungen, ggf. unter Zuhilfenahme eines Transformators, abgegeben wird.

Das heiße Abgas der Gasturbine wird über eine Zusatzfeuerungseinrichtung 17, in der durch Verbrennung von über die Leitung 18 zugeführtem Erdgas die Temperatur des Abgases erhöht werden kann, in einen Abhitzekessel 20 geführt. Von dort gelangt das Abgas über die Leitung 19 in die Umgebung.

Der Abhitzekessel 20 ist nach dem Prinzip eines Großwasserraumkessels aufgebaut, d.h. im Inneren einer äußeren Hülle 21 des Abhitzekessels 20 ist ein Großwasserraumkessel 22 vorgesehen, der von zwischen dem Großwasserraumkessel 22 und der äußeren Hülle strömenden heißen Abgas der Gasturbine 10 erhitzt wird. Dadurch wird in dem Großwasserraumkessel 22 befindliches Speisewasser über den Siedepunkt erhitzt und es entsteht Wasserdampf.

Der Wasserdampf wird über eine Leitung 23 einer Dampfturbine 30 zugeführt, die wiederum mit einem Generator 31 verbunden ist. Die vom Generator 31 erzeugte elektrische Leistung wird über nicht dargestellte Leitungen abgegeben. Von der Dampfturbine 30 gelangt ein Teil des Wasserdampfs über die Leitung 32 und ein Dampfregelventil 33 in den Speisewasserbehälter 34, insbesondere zur Entgasung, bevor er anschließend kondensiert. Bereits in der Dampfturbine 30 kondensiertes Wasser wird über eine nicht dargestellte Leitung ebenfalls in den Speisewasserbehälter 34 zurückgeführt.

Zwischen Dampfturbine 30 und Speisewasserbehälter 33 ist weiterhin eine Abzweigung 35 für Prozessdampf vorgesehen. In der Regel wird ein Großteil des von der Dampfturbine 30 kommenden Wasserdampfes über die Abzweigung 35 als Prozessdampf einer angeschlossenen Industrieanlage zugeführt und - häufig nach Kondensierung - über die Leitung 36 zum KWK-GuD-Kraftwerk 1 zurückgeführt. Über ein Rücklaufregelventil 37 gelangt das zurückgeführte Prozessmedium in den Speisewasserbehälter 34. Durch das Dampfregelventil 33 wird in erster Linie die zum Entgasen im Speisewasserbehälter 34 benötigte Dampfmenge geregelt, während über das Rücklaufregelventil 37 die Menge des rücklaufenden Prozessmediums von der angeschlossenen Industrieanlage geregelt werden kann.

Von dem Speisewasserbehälter 34 gelangt das Speisewasser über eine Speisewasserpumpe 38 zu einem Speisewasserregelventil 24 des Abhitzekessels 20, von wo aus das Speisewasser in dem Großraumwasserkessel 22 gelangt, sodass ein geschlossener Speisewasserkreislauf geschaffen ist..

Da häufig weniger kondensiertes Prozessmedium von der angeschlossenen Anlage in den Speisewassertank 34 zurückgespeist wird, als der Anlage von dem KWK-GuD-Kraftwerk 1 insbesondere in Form von Prozessdampf zur Verfügung gestellt wurde, ist eine Wasser-Zuspeisung vorgesehen, mit der bei Bedarf vollentsalztes Wasser durch die Leitung 39 in den Speisewassertank zugespeist werden kann. Zur Regelung der Zuspeisung ist ein Zuspeiseventil 44 vorgesehen. Sämtliche ansteuerbare Komponenten des KWK-GuD-Kraftwerks 1 werden über das Steuerungssystem 40 über - aus Gründen der Übersichtlichkeit nicht dargestellte - Steuerungsleitungen gesteuert. Das Steuerungssystem 40 umfasst dabei ein Expertensystem 41 und ein Bereitschaftskommunikationsmodul 42. Das Expertensystem 41 ermöglicht einen sicheren Betrieb des KWK-GuD-Kraftwerks 1 auch ohne ständige Beaufsichtigung. Für das Steuerungssystem 40 mit dem Expertensystem 41 ist das redundante Steuerungssystem 40', ebenfalls mit Expertensystem 41' und Bereitschaftskommunikationsmodul 42' vorgesehen, wobei das redundant vorgesehene Steuerungssystem 40' die Steuerung des KWK-GuD-Kraftwerks 1 übernimmt, wenn das primäre Steuerungssystem 40 oder eine Komponente davon ausfällt oder eine Fehlfunktion aufweist. Dazu kann das redundante Steuerungssystem 40' parallel zu dem primären Steuerungssystem 40 in heißer Redundanz betrieben werden, um bei Ausfall des primären Steuerungssystems 40 unmittelbar einspringen zu können.

Um den Betrieb auch ohne ständige Beaufsichtigung zu ermöglichen, sind bei dem erfindungsgemäßen KWK-GuD-Kraftwerk 1 die für den Betrieb erforderlichen Stellglieder redundant ausgeführt. So sind für das Dampfregelventil 33, das Rücklaufregelventil 37, die Speisewasserpumpe 38 und das Speisewasserregelventil 24 jeweils ein redundantes Dampfregelventil 33', ein redundantes Rücklaufregelventil 37', eine redundante Speisewasserpumpe 38' und ein redundantes Speisewasserregelventil 24' vorgesehen. Die Redundanz ist jeweils eine kalte Redundanz.

Vor den Speisewasserregelventilen 24, 24' ist ein Umschaltventil 25 vorgesehen ist, mit dem von dem Speisewasserregelventil 24 auf das redundant vorgesehene Speisewasserregelventil 24' vollständig umgeschaltet werden kann. Dies ist hilfreich um einen unkontrollierten Speisewasserzufluss in den Großwasserraumkessel 22 durch ein defektes Speisewasserregelventil 24 zu vermeiden. Über das Umschaltventil 25 kann das defekte Speisewasserregelventil 24 vollständig umgangen werden und die Regelung des Speisewasserzuflusses erfolgt ausschließlich über das redundant vorgesehene Speisewasserregelventil 24'. Das Zuspeiseventil 44 ist für den sicheren Betrieb des KWK-GuD-Kraftwerks 1 hingegen nicht derart relevant, dass es redundant ausgeführt werden müsste.

Weiterhin sind diverse Sensoren vorgesehen, die mit dem Steuerungssystem 40 bzw. dem Expertensystem 41 verbunden sind. Zu diesen Sensoren gehören Drucksensoren 51 und Wasserstandsensoren 52 am Großwasserraumkessel 22, aber auch die Wasserreinheitssensoren 53, 54, von denen einer in der Leitung 36 für den Rücklauf von Kondensat, der andere in der Leitung 39 für die Wasserzuspeisung angeordnet ist. Die Messwerte eines Teil der Sensoren - nämlich Drucksensoren 51 und Wasserstandsensoren 52 am Großwasserraumkessel 22 - werden bei der Steuerung des KWK-GuD-Kraftwerks 1 durch das Steuerungssystem 40 für den sicheren Betrieb unmittelbar berücksichtigt, während das Messergebnis der Wasserreinheitssensoren 53, 54 zwar Auskunft über mögliche Fehlfunktionen, bspw. der angeschlossenen Anlage und/oder der Wasserzuspeisung liefern, müssen deren Messwerte bei der tatsächlichen Steuerung des KWK-GuD-Kraftwerks 1 nicht berücksichtigt werden.

Die für den Betrieb des KWK-GuD-Kraftwerks 1 erforderlichen Sensoren 51, 52 sind jeweils zweifach redundant 51', 52' vorgesehen und in einer 2oo3-Konfiguration verschaltet. Dadurch ist sichergestellt, dass das Steuerungssystem 40 bzw. das Expertensystem 41 auch bei Ausfall eines einzelnen Sensors 51, 52, 51', 52' weiter mit korrekten Messergebnissen versorgt wird.

Über die Wasserreinheitssensoren 53, 54 kann zwar die Funktionsweise der angeschlossenen Anlage bzw. der Wassereinspeisung überprüft werden. Ein Defekt der Wasserreinheitssensoren 53, 54 ist jedoch nicht unmittelbar kritisch für den Betrieb des KWK-GuD-Kraftwerks 1, weshalb diese Sensoren im dargestellten Ausführungsbeispiel nicht redundant vorgesehen sind.

Das Steuerungssystem 40 und insbesondere das Expertensystem 41 ist dazu ausgebildet, den Betrieb des KWK-GuD-Kraftwerks 1 zu steuern. Darüber hinaus ist das Expertensystem 41 so ausgebildet, eine Fehlfunktion eines Stellglieds und/oder eines Sensors zu ermitteln, indem eine Abweichung des tatsächlichen Verhaltens des KWK-GuD-Kraftwerks 1 von dem auf Basis der Messergebnisse und Ansteuerung der Stellglieder zu erwartenden Verhalten festgestellt wird, wobei das Expertensystem 41 in der Lage ist, das potentielle defekte Stellglied oder den wahrscheinlich defekten Sensor zu identifizieren. In einem solchen Fall kann das Expertensystem 41 auf den wenigstens einen zu dem defekten Stellglied bzw. Sensor redundant vorgesehenes Stellglied bzw. Sensor umschalten, sodass das KWK-GuD-Kraftwerks 1 weiter betrieben werden kann. Dauert das abweichende Verhalten nach entsprechendem Umschalten an oder tritt erneut eine Abweichung auf, kann das Expertensystem 41 das KWK-GuD-Kraftwerk 1 geordnet abschalten.

Stellt das Expertensystem 41 eine Abweichung des tatsächlichen von dem erwarteten Verhalten des KWK-GuD-Kraftwerks 1 fest, kann über das Bereitschaftskommunikationsmodul 42 auch eine entsprechende Mitteilung an einen Bereitschaftshabenden versandt werden, der dann ggf. erforderliche weitergehende Maßnahmen zur Sicherstellung des Betriebs des KWK-GuD-Kraftwerks 1 veranlassen kann.

Das Steuerungssystem 41 ist weiterhin dazu ausgebildet die in kalter Redundanz vorgesehenen Stellglieder einmal in der Woche auf die Funktionsfähigkeit zu prüfen, indem die Stellglieder aktiviert und zwischen ihren jeweiligen Endpositionen hin- und hergefahren werden.

In dem Speisewassersystem sind einzelne Absperrschieber 60 angeordnet, die von dem Steuerungssystem 40 bzw. dem Expertensystem 41 angesteuert werden können. Wird von dem Expertensystem 41 über die Wasserreinheitssensoren 53, 54 eine Verschlechterung der Wasserqualität festgestellt, kann durch Schließen der entsprechenden Absperrschieber 60 verhindert werden, dass auch andere Komponenten des Speisewasserkreislaufs oder der Abhitzekessel 20 durch die Verschmutzung beschädigt werden. Das KWK-GuD-Kraftwerk 1 ist in diesem Fall geordnet abzuschalten.

## Patentansprüche

1. KWK-GuD-Kraftwerk (1) umfassend eine Gasturbine (10) mit daran angeschlossenem Generator (16) zur Erzeugung elektrischer Leistung und einem Abhitzekessel (20) zur Dampferzeugung durch Erhitzen von Speisewasser mit dem Abgas der Gasturbine (10), eine mit dem im Abhitzekessel erzeugten Dampf betriebene Dampfturbine (30) mit daran angeschlossenem Generator (31) zur Erzeugung elektrischer Leistung, wobei wenigstens ein Teil des aus der Dampfturbine (30) austretenden Dampfs oder des in der Dampfturbine (30) entstehenden heißen Kondensats als Prozessmedium abgeführt wird,
**dadurch gekennzeichnet, dass**
ein Steuerungssystem (40) umfassend ein Expertensystem (41) vorgesehen ist und die für den Betrieb des KWK-GuD-Kraftwerk (1) erforderlichen Stellglieder (24, 33, 37, 38) und Sensoren (51, 52) wenigstens einfach redundant ausgeführt sind (24', 33', 37', 38', 51', 52'), sodass das Expertensystem (41) bei Feststellung einer Abweichung des tatsächlichen Verhaltens von dem erwarteten Verhalten des KWK-GuD-Kraftwerk (1) potentiell fehlerhafte Stellglieder (24, 33, 37 , 38) und/oder Sensoren (51, 52) ermittelt und auf die jeweils redundant vorgesehenen Stellglieder (24', 33', 37', 38') und/oder Sensoren (51', 52') umschaltet.

2. KWK-GuD-Kraftwerk nach Anspruch 1,
**dadurch gekennzeichnet, dass**
die Redundanz der Stellglieder (24, 33, 37, 38) eine kalte Redundanz ist, wobei das Steuerungssystem vorzugsweise dazu ausgebildet ist, die Funktionsfähigkeit der redundant vorgesehenen Stellglieder (24, 33, 37, 38) regelmäßig zu prüfen.

3. KWK-GuD-Kraftwerk nach einem der vorhergehenden Ansprüche,
**dadurch gekennzeichnet, dass**
die für den Betrieb des KWK-GuD-Kraftwerks (1) erforderlichen Sensoren zweifach redundant vorgesehen und in einer 2oo3-Konfiguration angeordnet sind.

4. KWK-GuD-Kraftwerk nach einem der vorhergehenden Ansprüche,
**dadurch gekennzeichnet, dass**
das Steuerungssystem (40) und/oder das Expertensystem (41) wenigstens einfach redundant ausgeführt sind.

5. KWK-GuD-Kraftwerk nach einem der vorhergehenden Ansprüche,
**dadurch gekennzeichnet, dass**
das Steuerungssystem (40) und/oder das Expertensystem (41) dazu ausgebildet ist, bei Fortdauer oder erneutem Auftreten einer Abweichung von dem tatsächlichem zu dem erwarteten Verhalten des KWK-GuD-Kraftwerk (1) nach Umstellung auf ein redundant vorgesehenes Stellglied (24', 33', 37', 38') und/oder Sensoren (51', 52') das KWK-GuD-Kraftwerk (1) geordnet abzuschalten.

6. KWK-GuD-Kraftwerk nach einem der vorhergehenden Ansprüche,
**dadurch gekennzeichnet, dass**
zur Dampferzeugung im Abhitzekessel (20) ein Großwasserraumkessel (22) vorgesehen ist, wobei die Sensoren für Druck (51) und Wasserstand (52) im Großwasserraumkessel (22) wenigstens einfach redundant, vorzugsweise wenigstens zweifach redundant (51', 52') in 2oo3-Konfiguration vorgesehen sind.

7. KWK-GuD-Kraftwerk nach einem der vorhergehenden Ansprüche,
**dadurch gekennzeichnet, dass**
der Abhitzekessel (20) ein Speisewasserregelventil (24) mit wenigstens einfacher Redundanz (24') aufweist, wobei vorzugsweise ein Umschaltventil (25) zum Umschalten zwischen dem Speisewasserregelventil (24) und dem redundanten Speisewasserregelventil (24') vorgesehen ist.

8. KWK-GuD-Kraftwerk nach einem der vorhergehenden Ansprüche,
**dadurch gekennzeichnet, dass**
ein Speisewassersystem zur Versorgung des Abhitzekessels (20) mit Speisewasser und zur Rückführung des Kondensats und/oder Wasserdampfs aus der Dampfturbine (30) und/oder des rückgeführten Prozessmedium vorgesehen ist, wobei das Speisewassersystem vorzugsweise jeweils wenigstens einfach redundant vorgesehenes Dampfregelventil (33, 33') und/oder Rücklaufregelventil (37, 37') zur Regelung des Rücklaufs von der Dampfturbine und/oder des Prozessmediums umfasst.

9. KWK-GuD-Kraftwerk nach einem der vorhergehenden Ansprüche,
**dadurch gekennzeichnet, dass**
in dem Speisewassersystem wenigstens ein von dem Steuerungssystem (40) ansteuerbarer Absperrschieber (60) vorgesehen ist.

10. KWK-GuD-Kraftwerk nach einem der vorhergehenden Ansprüche,
**dadurch gekennzeichnet, dass**
zusätzliche, für die eigentliche Steuerung des KWK-GuD-Kraftwerks (1) nicht erforderliche Sensoren (53) vorgesehen sind, die Hinweise auf mögliche Störungen geben können.

11. KWK-GuD-Kraftwerk nach einem der vorhergehenden Ansprüche,
**dadurch gekennzeichnet, dass**
wenigstens ein Kühlwasserkreislauf ein Expansionsbehälter mit automatischer Druckhaltesteuerung und Nachfülleinheit umfasst, die vorzugsweise redundant vorgesehen sind.

12. KWK-GuD-Kraftwerk nach einem der vorhergehenden Ansprüche,
**dadurch gekennzeichnet, dass**
das Steuerungssystem (40) ein Bereitschaftskommunikationsmodul (42) zum Aussenden einer Mitteilung an einen Bereitschaftshabenden im Falle einer vom Expertensystem (41) festgestellten Abweichung umfasst.

13. KWK-GuD-Kraftwerk nach einem der vorhergehenden Ansprüche,
**dadurch gekennzeichnet, dass**
das Prozessmedium und/oder das aus dem Abhitzekessel austretende heiße Gas zur Abgabe von thermischer Leistung durch einen Wärmetauscher geführt werden.

14. KWK-GuD-Kraftwerk nach einem der vorhergehenden Ansprüche,
**dadurch gekennzeichnet, dass**
zwischen Gasturbine (10) und Abhitzekessel (20) eine Zusatzfeuerungseinrichtung (17) vorgesehen ist.
